# EUROPEAN PATENT APPLICATION

(11) **EP 3 185 225 A1**
(43) Date of publication of application: **28.06.2017**
(21) Application number: 16205268.2
(22) Date of filing: 20.12.2016
(51) Int. Cl.: G07G 1/00, G07G 1/14, G06Q 20/20

(54) **CHECKOUT SYSTEM, COMMODITY REGISTRATION APPARATUS AND SETTLEMENT APPARATUS**

(30) Priority: 22.12.2015 JP 2015249738
(71) Applicant: Toshiba TEC Kabushiki Kaisha, Tokyo 141-0032 (JP)
(72) Inventor: HAKETA, Takuya, Shinagawa-ku, Tokyo 141-8562 (JP)
(74) Representative: Takeuchi, Maya

(57) **Abstract**

A checkout system comprises a commodity registration apparatus including a generation module which generates settlement information for settling a purchased commodity in a carrying equipment, a first acquisition module which acquires an identification code of the carrying equipment, and a control module which stores the settlement information in a memory device in association with the identification code acquired by the first acquisition module, and a settlement apparatus including a second acquisition module which acquires an identification code of the carrying equipment moved from the commodity registration apparatus to the settlement apparatus, a settlement module which executes a settlement processing for the purchased commodity in the carrying equipment based on the settlement information stored in the memory device in association with the identification code, acquired by the first acquisition module, which is the same as that acquired by the second acquisition module.

## Description

### FIELD

Embodiments described herein relate generally to a checkout system, a commodity registration apparatus and a settlement apparatus.

### BACKGROUND

A semi-self-type checkout system including a commodity registration apparatus and a settlement apparatus is well known in a supermarket and the like. The commodity registration apparatus executes a purchase registration processing, on the one hand, and the settlement apparatus executes a settlement processing, on the other hand. A store clerk carries out an operation on the commodity registration apparatus and a customer carries out an operation on the settlement apparatus after the purchase registration processing is carried out by the commodity registration apparatus.

In such a system, settlement information for a settlement processing is transferred from the commodity registration apparatus to the settlement apparatus that is in a standby state. Thus, in a case in which all the settlement apparatuses are executing the settlement processing, the settlement information cannot be transferred to the settlement apparatus, and the purchase registration processing by the commodity registration apparatus is also delayed.

From the above-described circumstances, it is desired to effectively execute the purchase registration processing and the settlement processing.

### DESCRIPTION OF THE DRAWINGS

Fig. 1 is a perspective view of a checkout system according to an embodiment;
Fig. 2 is a diagram illustrating the appearance of a shopping basket used in the checkout system shown in Fig. 1;
Fig. 3 is a block diagram illustrating circuit configurations of main sections of the checkout system shown in Fig. 1;
Fig. 4 is a flowchart illustrating a control processing carried out by a CPU of a commodity registration apparatus shown in Fig. 1; and
Fig. 5 is a flowchart illustrating a control processing carried out by a CPU of a settlement apparatus shown in Fig. 1.

### DETAILED DESCRIPTION

In accordance with an embodiment, a checkout system comprises a commodity registration apparatus including a generation module, a first acquisition module and a control module; and a settlement apparatus including a second acquisition module and a settlement module. The generation module generates settlement information for settling a purchased commodity in a carrying equipment. The first acquisition module acquires an identification code of the carrying equipment which is moved from the commodity registration apparatus to the settlement apparatus. The control module stores the settlement information generated by the generation module in a memory device in association with the identification code acquired by the first acquisition module. The second acquisition module acquires an identification code of the carrying equipment moved from the commodity registration apparatus. The settlement module executes a settlement processing for the purchased commodity in the carrying equipment based on the settlement information stored in the memory device in association with the identification code, acquired by the first acquisition module, which is the same as that acquired by the second acquisition module.

The control module stores the settlement information in the memory device in association with a combination of a plurality of identification codes if the first acquisition module acquires the plurality of identification codes within a period in which the generation module executes a processing for generating the settlement information, and the settlement module executes the settlement processing based on the settlement information if the settlement information is stored in the memory device in association with the combination of the plurality of identification codes including the identification code acquired by the second acquisition module.

The checkout system may include an information processing apparatus, wherein the memory device is arranged in one of the commodity registration apparatus, the settlement apparatus and the information processing apparatus.

The checkout system may further include an information processing apparatus, wherein the memory device is arranged in one of the commodity registration apparatus, the settlement apparatus and the information processing apparatus.

The checkout system may further comprise a plurality of settlement apparatus.

The checkout system may further comprise a plurality of commodity registration apparatus.

According to the checkout system of the present invention, if the purchase registration of one transaction is completed, and settlement information for settling a purchased commodity in a carrying equipment is generated, it is possible to rapidly start the purchase registration relating to another or next transaction based on the settlement information in the commodity registration apparatus without waiting for the completion of the settlement of the transaction the purchase registration of which is just completed. The customer places the a carrying equipment in which commodities the purchase registration of which is completed is carried to the settlement apparatus, and thus, it is possible to rapidly start the settlement relating to the commodities the purchase registration of which is completed. Accordingly, the purchase registration processing and the settlement processing can be effectively executed.

As it is no more necessary for a store clerk to select the transfer destination of the settlement information, a working burden of the store clerk becomes smaller compared with a case in which the selection of the transfer destination by the store clerk is necessary.

Preferably, the number of the settlement apparatus is superior to the number of the commodity registration apparatus.

The present invention also relates to a commodity registration apparatus, which constitutes a checkout system together with a settlement apparatus which acquires an identification code of a carrying equipment in which a purchased commodity is put and executes a settlement processing for the purchased commodity in the carrying equipment based on a settlement information in a memory device, comprising: a generation module configured to generate the settlement information; a first acquisition module configured to acquire the identification code of the carrying equipment moved from the commodity registration apparatus to the settlement apparatus; and a control module configured to store the settlement information generated by the generation module in the memory device in association with the identification code acquired by the first acquisition module.

The present invention further relates to a settlement apparatus, which constitutes a checkout system together with a commodity registration apparatus which generates a settlement information of a purchased commodity in a carrying equipment, acquires an identification code of the carrying equipment and stores the settlement information in a memory device in association with the identification code, comprising: a second acquisition module configured to acquire an identification code of the carrying equipment moved to the settlement apparatus; and a settlement module configured to execute a settlement processing for the purchased commodity in the carrying equipment based on the settlement information stored in the memory device in association with the identification code the same as that acquired by the second acquisition module.

An embodiment of a present invention is described below, as non-limiting examples, with reference to the accompanying drawings.

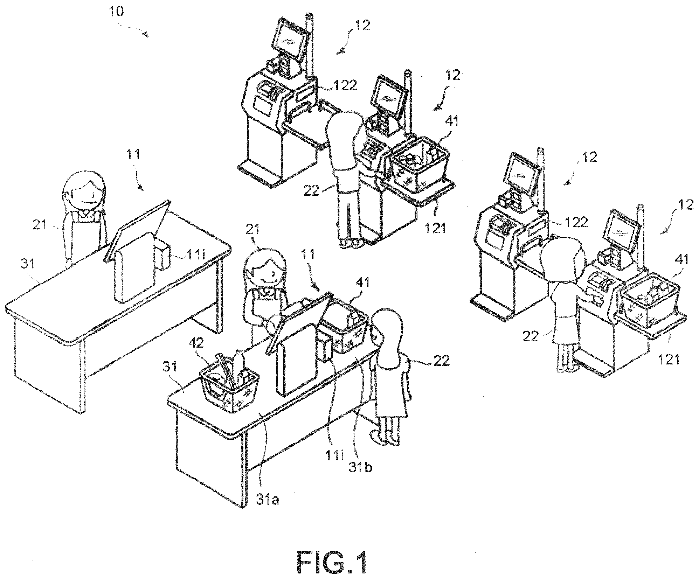

Fig. 1 is a perspective view of a checkout system 10 according to the present embodiment.

The checkout system 10 includes, for example, at least one commodity registration apparatus 11 and one settlement apparatus 12. In Fig. 1, the checkout system 10 includes two commodity registration apparatuses 11 and four settlement apparatuses 12. The checkout system 10 may include an optional number of commodity registration apparatuses 11 and an optional number of settlement apparatuses 12, and the ratio of the number of the commodity registration apparatuses 11 to the number of the settlement apparatuses 12 may be an optional value. The commodity registration apparatus 11 and the settlement apparatus 12 are arranged at a checkout zone of a store such as a supermarket.

A store clerk 21 acting as a checker operates the commodity registration apparatus 11. A customer 22 who purchases a commodity sold in the store operates the settlement apparatus 12. However, there is a case in which the customer 22 also carries out a part of operations of the commodity registration apparatus 11. Further, there is also a case in which the store clerk 21 operates the settlement apparatus 12.

In Fig. 1, the commodity registration apparatus 11 is mounted on a working table 31 having a rectangular-shaped top plate. A plurality of working tables 31 are arranged in parallel in the longitudinal direction of the top plates to form a passage for the customer 22 therebetween.

The commodity registration apparatus 11 has a purchase registration function, a settlement information generation function, a settlement processing function and a function of notifying the settlement apparatus 12 of the settlement information. The purchase registration function refers to a processing function of registering, as a purchased commodity, a commodity carried by the customer walking into the passage. The settlement processing function refers to a processing function for settlement of the purchased commodity. The settlement information refers to information needed for the settlement processing.

The upper surface of the working table 31 is divided into two areas 31a and 31b sandwiching the commodity registration apparatus 11. The area 31a located at an upstream side of a movement direction of the customer 22 is used as a space for placing commodities the purchase registration of which is not completed in commodities the customer intends to purchase. The area 31b located at a downstream side is used as a space for placing commodities the purchase registration of which is completed. At the time the purchase registration is executed, a shopping basket 41 is placed on the area 31b by the store clerk 21. The shopping basket 41 is an example of carrying equipment for taking a commodity or commodities the purchase registration of which is completed to the settlement apparatus 12. Then, the commodity the purchase registration of which is completed is put into the shopping basket 41 by the store clerk 21. The shopping basket 41 may be common with or different from a shopping basket 42 for the customer to take the commodities the customer intends to purchase from a sales zone to the checkout zone.

The settlement apparatus 12 carries out the settlement processing based on the settlement information generated by the commodity registration apparatus 11. At the time of executing the settlement processing, the shopping basket 41 in which the purchased commodities subject to the settlement processing are put is placed on a table 121.

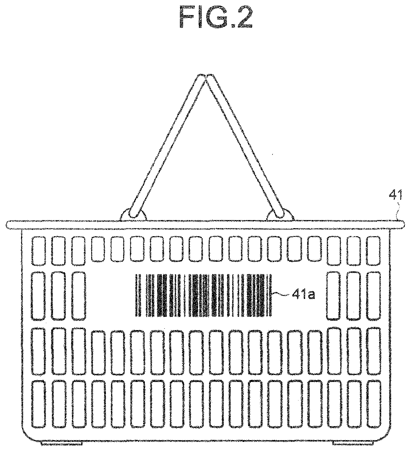

Fig. 2 is a diagram illustrating the appearance of the shopping basket 41. As shown in Fig. 2, a barcode 41a is formed at a side surface of the shopping basket 41. The barcode 41a indicates a basket code for identifying individual shopping basket 41. The barcode 41a may be formed at other locations such as another side surface opposite to the side surface described above or a bottom surface of the shopping basket 41. However, all of the plural barcodes 41a formed on the same shopping basket indicate the same basket code.

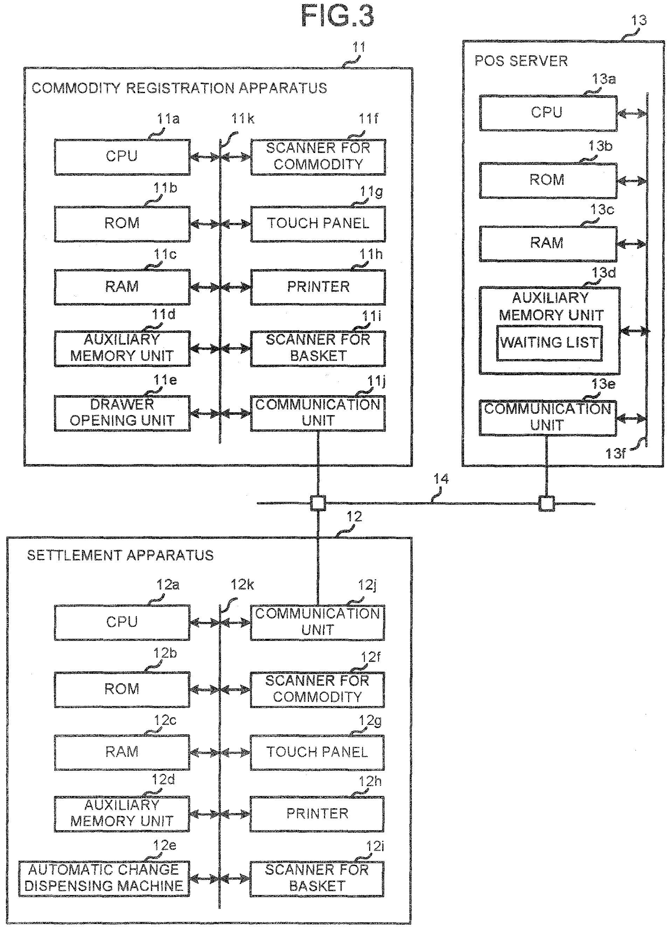

Fig. 3 is a block diagram illustrating the circuit configurations of main portions of the checkout system 10.

The checkout system 10 comprises a POS server 13 in addition to the commodity registration apparatus 11 and the settlement apparatus 12. The POS server 13 is a so-called store server arranged in the store or a so-called headquarters server arranged in headquarters which collectively manages a plurality of stores containing the store described above. The POS server 13 adds up sales data. The POS server 13 also manages data used in the commodity registration apparatus 11 and the settlement apparatus 12. In other words, the POS server 13 includes the same functions as an existing POS server. The POS server 13 further intermediates transmission and reception of the settlement information from the commodity registration apparatus 11 to the settlement apparatus 12.

The commodity registration apparatus 11, the settlement apparatus 12 and the POS server 13 are all connected with a LAN (local area network) 14. Other communication network such as the internet can also be used instead of the LAN 14. Thus, the commodity registration apparatus 11 and the settlement apparatus 12 can communicate with the POS server 13 via the LAN 14.

The commodity registration apparatus 11 comprises a CPU (central processing unit) 11a, a ROM (read-only memory) 11b, a RAM (random-access memory) 11c, an auxiliary memory unit 11d, a drawer opening unit 11e, a scanner for commodity 11f, a touch panel 11g, a printer 11h, a scanner for basket 11i, a communication unit 11j and a transmission system 11k.

The CPU 11 a, the ROM 11b, the RAM 11c and the auxiliary memory unit 11d are connected with each other via the transmission system 11k to constitute a computer.

The CPU 11a acting as the main unit of the computer controls each section of the commodity registration apparatus 11 for realizing various operations of the commodity registration apparatus 11 based on an operating system, middleware and application programs stored in the ROM 11b and the RAM 11c.

The ROM 11b acting as a main memory unit of the computer stores the operating system. The ROM 11b also stores the middleware or application programs in some cases. The ROM 11b still also stores reference data required to execute various processing by the CPU 11a in some cases.

The RAM 11c acting as the main storage unit of the computer also stores reference data required to execute various processing by the CPU 11a. Further, the RAM 11c is used as a so-called working area in which data temporarily used by the CPU 11a for executing various processing is stored.

The auxiliary memory unit 11d acting as the auxiliary storage unit of the computer stores data used by the CPU 11a for various processing or data generated through the processing carried out by the CPU 11a. The auxiliary memory unit 11d may be, for example, an EEPROM (electric erasable programmable read-only memory), an HDD (hard disk drive) or an SSD (solid state drive).

Application programs stored in the ROM 11b or the auxiliary memory unit 11d include a control program written for a control processing described later. The transfer of the commodity registration apparatus 11 is generally made in a state in which the control program is stored in the ROM 11b or the auxiliary memory unit 11d. However, the commodity registration apparatus 11 may also be transferred in a state in which the control program is not stored in the ROM 11b or the auxiliary memory unit 11d and meanwhile the control program is recorded in a removable recording medium or transferred via a network. In this case, the control program is stored in the auxiliary memory unit 11d of the commodity registration apparatus 11 in response to an operation by the user, for example. The removable recording medium may be a magnetic disk, a magnetic-optical disk, an optical disk or a semiconductor memory.

The drawer opening unit 11e automatically opens a drawer for housing banknotes and coins.

The scanner for commodity 11f reads a commodity code of a commodity to acquire information of the commodity. The scanner for commodity 11f can use various types of known scanners without any modification. The scanner for commodity 11f may be only one type or a plurality of types of known scanners. For example, the scanner for commodity 11f may be a fixed or handy-type two-dimension code scanner. The scanner for commodity 11f may be a type which identifies the commodity according to the image of the commodity with an image recognition technology.

The touch panel 11g includes a display device and a touch sensor. The display device displays a GUI (graphical user interface) screen or any other screens. The display device may be, for example, a known device such as a color LCD. The touch sensor is overlaid on a display surface of the display device. The touch sensor detects the touch position on the display surface of the display device by the operator and sends the position information to the CPU 11 a. The touch sensor may be a known device.

The printer 11h which is, for example, a thermal printer or an impact dot printer, issues a receipt by printing various character strings and images on a receipt paper.

The scanner for basket 11i is arranged toward the area 31b on the working table 31 as shown in Fig. 1. The scanner for basket 11i reads out the basket code from the barcode formed on the shopping basket 41 placed on the area 31b. The scanner for basket 11i is an example of the first acquisition module.

The communication unit 11j carries out communication via the LAN 14. The transmission system 11k transmits data transmitted or received among the CPU 11 a, the ROM 11b, the RAM 11c, the auxiliary memory unit 11d, the drawer opening unit 11e, the scanner for commodity 11f, the touch panel 11g, the printer 11h and the communication unit 11j. The transmission system 11k may be a known system which includes various buses such as a system bus and various interface circuits for connecting the buses with each section.

Further, the hardware of the commodity registration apparatus 11 may be, for example, an existing POS terminal.

The settlement apparatus 12 comprises a CPU 12a, a ROM 12b, a RAM 12c, an auxiliary memory unit 12d, an automatic change dispensing machine 12e, a scanner for commodity 12f, a touch panel 12g, a printer 12h, a scanner for basket 12i, a communication unit 12j and a transmission system 12k.

The CPU 12a, the ROM 12b, the RAM 12c and the auxiliary memory unit 12d are connected with each other via the transmission system 12k to constitute a computer.

The CPU 12a acting as a main unit of the computer controls each section for realizing various operations of the settlement apparatus 12 according to an operating system, middleware and application programs stored in the ROM 12b and the RAM 12c.

The ROM 12b acting as the main memory unit of the computer stores the operating system. There may be a case in which the ROM 12b also stores the middleware or application programs. Further, the ROM 12b also stores reference data required to execute various processing by the CPU 12a in some cases.

The RAM 12c acting as the main storage unit of the computer also stores reference data required to execute various processing by the CPU 12a. Further, the RAM 12c is used as a so-called working area in which data temporarily used by the CPU 12a to carry out various processing is stored in advance.

The auxiliary memory unit 12d acting as the auxiliary storage unit of the computer stores data used by the CPU 12a for various processing or data generated through the processing carried out by the CPU 12a. The auxiliary memory unit 12d may be, for example, an EEPROM, an HDD or an SSD.

Application programs stored in the ROM 12b or the auxiliary memory unit 12d include a control program written for a control processing described later. The settlement apparatus 12 is transferred in a state in which the control program is stored in the ROM 12b or the auxiliary memory unit 12d. However, the settlement apparatus 12 may also be transferred in a state in which the control program is not stored in the ROM 12b or the auxiliary memory unit 12d and meanwhile the control program is recorded in a removable recording medium or transferred via a network. In this case, the control program is recorded in the auxiliary memory unit 12d of the settlement apparatus 12 in response to an operation by the user, for example. The removable recording medium may be a magnetic disk, a magnetic-optical disk, an optical disk or a semiconductor memory.

The automatic change dispensing machine 12e receives input or deposited coins and bills. Further, the automatic change dispensing machine 12e dispenses coins and bills as change.

The scanner for commodity 12f reads a commodity code of a commodity to acquire information of the commodity. The scanner for commodity 12f may use various known scanners without any modification. The scanner for commodity 12f may be only one type or a plurality of types of known scanners. For example, the scanner for commodity 12f may be a fixed or handy-type two-dimension code scanner. Further, the scanner for commodity 12f may be a type which identifies the category of a commodity according to the image of the commodity with the image recognition technology.

The touch panel 12g includes a display device and a touch sensor. The display device displays a GUI screen or any other screens. The display device may be, for example, a known device such as a color LCD. The touch sensor is overlaid on the display surface of the display device. The touch sensor detects the touch position on a display surface of the display device by the operator and sends the position information to the CPU 12a. The touch sensor may be a known device.

The printer 12h which is, for example, a thermal printer or an impact dot printer, issues a receipt by printing various character strings and images on a receipt paper. The receipt paper refers to a sheet-like medium used for printing; however, material of the sheet-like medium is not limited to a paper.

The scanner for basket 12i reads out the barcode 41a formed on the shopping basket 41 placed on the table 121 via a window 122 arranged as shown in Fig. 1. The scanner for basket 12i is an example of a second acquisition module.

The communication unit 12j executes communication via the LAN 14.

The transmission system 12k transmits data transmitted or received among the CPU 12a, the ROM 12b, the RAM 12c, the auxiliary memory unit 12d, the automatic change dispensing machine 12e, the scanner for commodity 12f, the touch panel 12g, the printer 12h and the communication unit 12j. The transmission system 12k may be a known system which includes various buses such as a system bus and various interface circuits for connecting the buses with each section.

Further, the hardware of the settlement apparatus 12 may be, for example, a known self-checkout POS terminal.

The POS server 13 comprises a CPU 13a, a ROM 13b, a RAM 13c, an auxiliary memory unit 13d, a communication unit 13e and a transmission system 13f.

The CPU 13a, the ROM 13b, the RAM 13c and the auxiliary memory unit 13d are connected with each other through the transmission system 13f to constitute a computer.

The CPU 13a acting as a main unit of the computer controls each section for realizing various operations of the POS terminal 13 according to an operating system, middleware and application programs stored in the ROM 13b and the RAM 13c.

The ROM 13b acting as the main storage unit of the computer stores the operating system. There may be a case in which the ROM 13b also stores the middleware or application programs. Further, the ROM 13b also stores reference data required to execute various processing by the CPU 13a in some cases.

The RAM 13c acting as the main storage unit of the computer also stores reference data required to execute various processing by the CPU 13a. Further, the RAM 13c is used as a so-called working area in which data temporarily used by the CPU 13a to carry out various processing is stored in advance.

The auxiliary memory unit 13d acting as the auxiliary storage unit of the computer stores data used by the CPU 13a for various processing or data generated through the processing carried out by the CPU 13a. In the present embodiment, the auxiliary memory unit 13d stores a waiting list L1 described later. The auxiliary memory unit 13d may be, for example, an EEPROM, an HDD or an SSD.

Application programs stored in the ROM 13b or the auxiliary memory unit 13d include a control program written for a control processing for realizing functions of the POS server. The POS server 13 is transferred in a state in which the control program is stored in the ROM 13b or the auxiliary memory unit 13d. However, the POS server 13 may also be transferred in a state in which the control program is not stored in the ROM 13b or the auxiliary memory unit 13d and meanwhile the control program is recorded in a removable recording medium or transferred via a network. In this case, the control program is recorded in the auxiliary memory unit 13d of the POS server 13 in response to an operation by the user, for example. The removable recording medium may be a magnetic disk, a magnetic-optical disk, an optical disk or a semiconductor memory.

The communication unit 13e executes communication via the LAN 14.

The transmission system 13f transmits data transmitted or received among the CPU 13a, the ROM 13b, the RAM 13c, the auxiliary memory unit 13d and the communication unit 13e. The transmission system 13f may be a known system which includes various buses such as a system bus and various interface circuits for connecting the buses with each section.

Further, the hardware of the POS server 13 may be, for example, a known server device for general purpose.

Next, operations of the checkout system 10 with the foregoing structure are described below. The content of the processing described below is merely an example, and various other processing that can achieve an equivalent result can also be properly adopted.

If the commodity registration apparatus 11 is activated in a mode in which the registration processing of purchased commodities is carried out, then the CPU 11 a starts a control processing according to the control program stored in the ROM 11b or the auxiliary memory unit 11d.

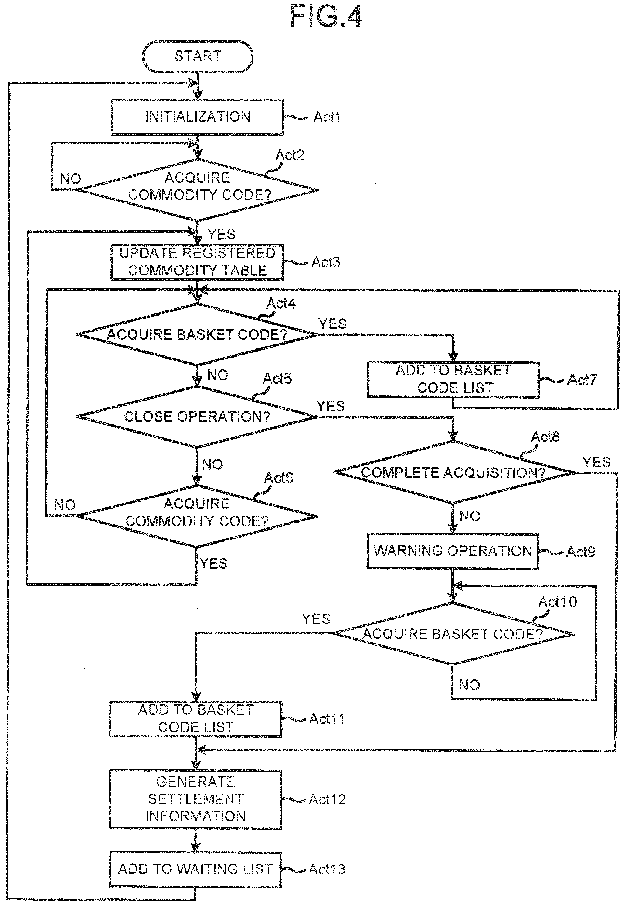

Fig. 4 is a flowchart illustrating the control processing carried out by the CPU 11a.

In Act 1, the CPU 11 a carries out an initialization. In particular, the CPU 11 a clears a registered commodity table and a basket code list set in the RAM 11c. The registered commodity table is a data table for recording information relating to the commodity the purchase registration of which is performed. The basket code list is a list of basket codes acquired in the execution of the registration of each purchased commodity in one transaction.

In Act 2, the CPU 11a determines whether or not a commodity code of the commodity of which the purchase registration is required is acquired. If it is determined that the commodity code is not acquired, NO is taken and the CPU 11a repeats the processing in Act 2. In this way, the CPU 11a waits for acquisition of the commodity code in Act 2.

The CPU 11a acquires the commodity code with the operation by the store clerk 21 through a known processing different from the control processing shown in Fig. 4. If the commodity code is acquired, Yes is taken in Act 2 and the CPU 11a proceeds to the processing in Act 3.

In Act 3, the CPU 11 a updates the registered commodity table to contain the acquired commodity code.

Then, at the time of executing the purchase registration of the commodity, it is set as a working rule for the store clerk 21 to arrange the shopping basket 41 on the area 31b of the working table 31 in such a manner that the barcode 41a formed thereon can be read by the scanner for basket 11i.

In Act 4, the CPU 11a determines whether or not the basket code is newly acquired. If it is determined that the basket code is not newly acquired according to the determination described later, No is taken in Act 4 and the CPU 11a proceeds to the processing in Act 5.

In Act 5, the CPU 11a determines whether or not a closing operation for declaring the close of the purchase registration in one transaction is executed. If it is determined that no closing operation is executed, No is taken in Act 5 and the CPU 11a proceeds to the processing in Act 6.

In Act 6, the CPU 11a determines whether or not the commodity code is newly acquired. If it is determined that the commodity code is not newly acquired, No is taken in Act 6 and the CPU 11a returns to the processing in Act 4.

In this way, the CPU 11a waits for until the basket code is newly acquired, the closing operation is executed or the commodity code is newly acquired in Act 4∼Act 6.

In Act 4, the CPU 11 a instructs the scanner for basket 11i to carry out reading. The scanner for basket 11i reads the barcode according to the instruction from the CPU 11a. If the barcode can be read, the scanner for basket 11i writes the barcode information represented by the barcode in the RAM 11c. If the barcode information is written in the RAM 11c by the scanner for basket 11i, the CPU 11a checks the barcode information. If the barcode information is not contained in the basket code list and meanwhile the barcode information indicates the basket code, Yes is taken and the CPU 11a proceeds to the processing in Act 7.

In Act 7, the CPU 11a adds the basket code indicated by the barcode information newly acquired to the basket code list. After that, the CPU 11a returns to a standby state in Act 4∼Act 6.

If the commodity code is newly acquired in the standby state in Act 4∼Act 6, Yes is taken in Act 6, and the CPU 11a returns to the processing in Act 3. In other words, the CPU 11a returns to the standby state in Act 4∼Act 6 after updating the registered commodity table so as to contain the newly acquired commodity code in the registered commodity table.

As stated above, the store clerk 21 repeats operations for enabling the CPU 11a to acquire the commodity code, and the commodity code is added to the registered commodity table. The store clerk 21 puts the commodity the purchase registration of which is completed in this way in the shopping basket 41. The store clerk 21 can exchange the shopping basket 41 to another one while the purchase registration in one transaction is executed. In this case, the basket code of another shopping basket 41 is newly acquired by the scanner for basket 11i, and accordingly, the CPU 11a adds the new basket code of the shopping basket 41 to the basket code list.

The store clerk 21 executes the predetermined closing operation such as touch on a checkout button on the touch panel 11g if the purchase registration of all the commodities in one transaction is completed. The CPU 11a determines that the closing operation is executed. Then Yes is taken in Act 5 and the CPU 11a proceeds to the processing in Act 8.

In Act 8, the CPU 11a determines whether or not the basket code is already acquired. If it is determined that any basket code is not contained in the basket code list, No is taken in Act 8 and the CPU 11a proceeds to the processing in Act 9.

In Act 9, the CPU 11a executes a warning operation. The warning operation is an operation for urging the store clerk 21 to place the shopping basket 41 according to the working rule described above. As an example of the warning operation, the CPU 11a controls the touch panel 11g to display a predetermined warning screen. The warning operation may be a control for other operations such as a sound generation or a voice generation.

In Act 10, the CPU 11a determines whether or not the basket code is acquired. If it is determined that no basket code is acquired, No is taken and the CPU 11a repeats the processing in Act 10. In this way, the CPU 11a waits for acquisition of the basket code in Act 10. If it is determined that the basket code is acquired, Yes is taken as being similar to Act 4, and the CPU 11 a proceeds to the processing in Act 11.

In Act 11, the CPU 11a adds the acquired basket code to the basket code list. After that, the CPU 11a proceeds to the processing in Act 12.

If the basket code is already acquired at the time of executing the closing operation and at least one basket code is contained in the basket code list, Yes is taken in Act 8, and the CPU 11a skips the processing in Act 9∼Act 11 to proceed to the processing in Act 12.

In Act 12, the CPU 11a generates the settlement information for settlement of the registered commodity recorded in the registered commodity table based on the content of the registered commodity table as of this point. The settlement information contains information necessary to determine a settlement amount such as a list of the registered commodities. The settlement information may contain information used, without any modification, as the settlement amount such as a total amount of purchased commodities. Thus, through executing the control processing according to the control program by the CPU 11a, the computer taking the CPU 11a as the main unit functions as a generation module.

In Act 13, the CPU 11a adds the settlement information to the waiting list L1. In particular, the CPU 11a transmits an addition request containing the settlement information generated in Act 12 and the basket code list from the communication unit 11j to the POS server 13 via the LAN 14. If the addition request is transmitted to POS server 13 via the LAN 14, the communication unit 13e of the POS server 13 receives the addition request. Accordingly, the CPU 13a adds the settlement information and the basket code list contained in the addition request in an associated manner to the waiting list L1 in the auxiliary memory unit 13d. The waiting list L1 is aggregation of data records containing the settlement information and the basket code list. The CPU 11 a returns to the processing in Act 1 after the settlement information is added to the waiting list L1 as described above. In this way, the CPU 11a prepares to start a processing relating to other transaction. Thus, through executing the control processing by the CPU 11a according to the control program, the computer taking the CPU 11 a as the main unit functions as a control module for enabling the auxiliary memory unit 13d, i.e., an example of the memory device, to store the settlement information in association with the basket code. Therefore, the POS server 13 is an example of an information processing apparatus including the memory device.

If the addition of the settlement information to the waiting list L1 is completed as described above, the store clerk 21 moves to settlement apparatus 12 which is not used or in a standby state and guides the customer 22 to carry out the settlement after the shopping basket 41 is placed on the table 121 of the settlement apparatus 12.

On the other hand, if the settlement apparatus 12 is activated, the CPU 12a starts the control processing according to the control program stored in the ROM 12b or the auxiliary memory unit 12d.

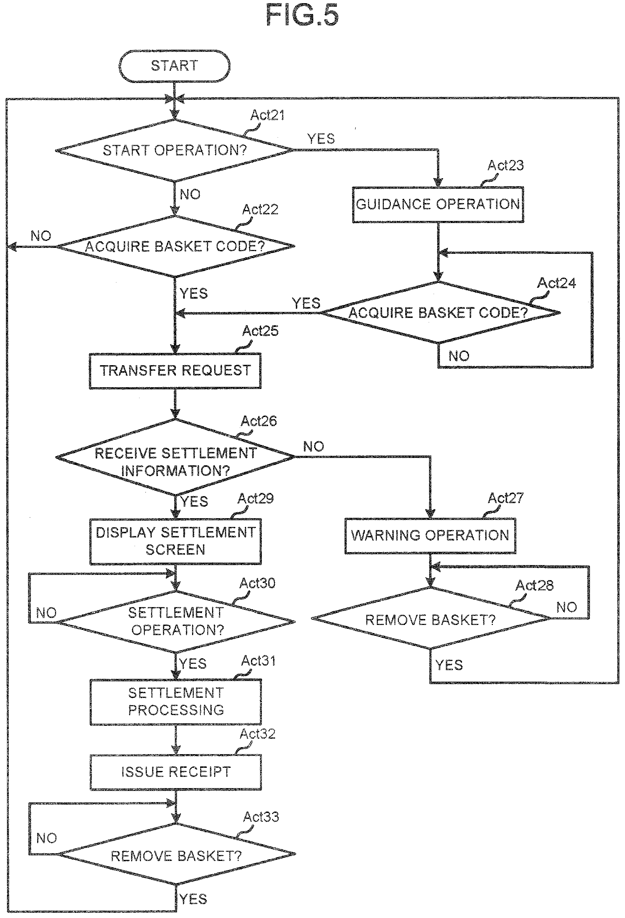

Fig. 5 is a flowchart of the control processing executed by the CPU 12a.

In Act 21, the CPU 12a determines whether or not a predetermined start operation for instructing the customer 22 to start the settlement is executed. If it is determined that no start operation is executed, No is taken and the CPU 12a proceeds to the processing in Act 22.

In Act 22, the CPU 12a determines whether or not the basket code is acquired. If it is determined that the basket code is not acquired according to a determination described later, No is taken and the CPU 12a returns to the processing in Act 21. In this way, the CPU 12a waits for until the start operation is executed or the basket code is acquired in Act 21 and Act 22.

If the start operation such as touch on a start button on the touch panel 12g is executed, Yes is taken in Act 21 and the CPU 12a proceeds to the processing in Act 23. In Act 23, the CPU 12a carries out a guidance operation. The guidance operation is an operation for guiding the customer 22 to place the shopping basket 41 on the table 121. As an example of the guidance operation, the CPU 12a controls the touch panel 12g to display a predetermined guidance screen. The guidance operation may be other operations such as a sound generation or a voice generation.

In Act 24, the CPU 12a determines whether or not the basket code is acquired. If it is determined that the basket code is not acquired based on the determination described later, No is taken and the CPU 12a repeats the processing in Act 24. In this way, the CPU 12a waits for the acquisition of the basket code in Act 24.

In Act 22 or Act 24, the CPU 12a instructs the scanner for basket 12i to carry out reading. The scanner for basket 12i reads the barcode according to the instruction from the CPU 12a. If the customer 22 places the shopping basket 41 on the table 121, the scanner for basket 12i can read out the barcode. If the barcode is read, the scanner for basket 12i writes the barcode information indicated by the barcode in the RAM 12c. If the barcode information is written in the RAM 12c through the scanner for basket 12i, and meanwhile the barcode information indicates the basket code, Yes is taken in Act 22 or Act 24 and the CPU 12a proceeds to the processing in Act 25.

In Act 25, the CPU 12a requests the POS server 13 to transfer the settlement information. In particular, the CPU 12a transmits a transfer request containing the basket code indicated by the barcode information read as stated above from the communication unit 12j to the POS server 13 via the LAN 14. If the transfer request is transmitted to the POS server 13 via the LAN 14, the communication unit 13e of the POS server 13 receives the transfer request.

Accordingly, the CPU 13a determines whether or not the basket code list containing the basket code included in the transfer request is contained in the waiting list L1. If the basket code list exists in the waiting list L1, the CPU 13a reads out the settlement information associated with the basket code list in the waiting list L1 from the auxiliary memory unit 13d. Further, the CPU 13a transmits the read settlement information from the communication unit 13e to the settlement apparatus 12 which transmits the transfer request described above via the LAN 14. However, if the basket code list containing the basket code included in the transfer request is not contained in the waiting list L1, the CPU 13a transmits error information from the communication unit 13e to the settlement apparatus 12 which transmits the transfer request described above via the LAN 14. Furthermore, in a case of transmitting the settlement information, the CPU 13a disables the data record including the settlement information. The disablement may be executed with any optional method such as a method of getting information such as a flag indicating whether or not the settlement is completed into a state indicating the completion of the settlement or a method of deleting the information such as the flag from the waiting list L1. If the settlement information or the error information is transmitted to the settlement apparatus 12 via the LAN 14, the communication unit 12j of the settlement apparatus 12 receives the settlement information or the error information and stores it in the RAM 12c or the auxiliary memory unit 12d.

Then, the CPU 12a proceeds to the processing in Act 26 after transmitting the transfer request in Act 25.

In Act 26, the CPU 12a determines whether or not the settlement information is received. If the error information is received, No is taken and the CPU 12a proceeds to the processing in Act 27.

In Act 27, the CPU 12a carries out an alarm operation. The alarm operation is an operation for warning the customer 22 that the shopping basket 41 placed on the table 121 is not proper. As an example of the alarm operation, the CPU 12a controls the touch panel 12g to display a predetermined warning screen. The alarm operation may be other operations such as a sound generation or a voice generation.

In Act 28, the CPU 12a determines whether or not the shopping basket 41 is removed from the table 121. If it is determined that the shopping basket 41 is not removed, the CPU 12a repeats the processing in Act 28. In this way, the CPU 12a waits for until the shopping basket 41 is removed from the table 121 in Act 28. If it is determined that the shopping basket 41 is removed, Yes is taken and the CPU 12a returns to a standby state in Act 21 and Act 22. Determination on whether the shopping basket 41 is removed from the table 121 can be made according to, for example, determination on whether the barcode is no longer read by the scanner for basket 12i. Alternatively, a sensor for detecting the shopping basket 41 such as a weight sensor or an optical sensor may be arranged to determine whether or not the shopping basket 41 is removed from the table 121 based on the output of the sensor.

The customer 22 having the shopping basket 41 in which commodities the purchase registration of which is completed are put moves to the settlement apparatus 12 in a standby state, and places the shopping basket 41 on the table 121 of the settlement apparatus 12. In this case, the barcode 41a formed on the shopping basket 41 is read by the scanner for basket 12i. The basket code indicated by the barcode information of the barcode 41 a read in this way is added to the basket code list included in the waiting list L1. Consequently, the settlement information is transmitted from the POS server 13 in response to the transfer request containing the basket code, and the settlement information is received by the communication unit 12j. If the settlement information is received, Yes is taken in Act 26, and the CPU 12a proceeds to the processing in Act 29.

In Act 29, the CPU 12a displays a settlement screen on the touch panel 12g. The settlement screen is used to receive an operation by the customer 22 for settlement based on the received settlement information. The settlement screen, for example, shows at least a total amount indicated in the settlement information. The settlement screen may contain total quantities and a list of purchased commodities. If the settlement with a plurality of settlement methods is allowed, the settlement screen contains buttons for selecting the settlement method by the customer 22.

In Act 30, the CPU 12a determines whether or not an operation for the settlement is executed by the customer 22. If it is determined that the operation for the settlement is not executed, No is taken, and the CPU 12a repeats the processing in Act 30. In this way, the CPU 12a waits for the execution of the operation for the settlement in Act 30.

The customer 22 carries out the operation for the settlement on the settlement screen described above. If the operation for the settlement is executed in this way and the operation is detected by the touch panel 12g, Yes is taken in Act 30 and the CPU 12a proceeds to the processing in Act 31.

In Act 31, the CPU 12a executes the settlement processing. The settlement processing refers to a processing for settling the transaction indicated by the settlement information stored in the RAM 12c or the auxiliary memory unit 12d in response to the operation by the customer 22. The settlement processing may use, for example, a processing executed by an existing self-checkout POS terminal without any modification. In this way, through executing the control processing according to the control program by the CPU 12a, the computer taking the CPU 12a as the main unit functions as a settlement module.

If an amount used as the settlement amount is included in the settlement information, the CPU 12a carries out the settlement processing for settling the amount in the settlement information. However, if the amount used as the settlement amount is not included in the settlement information, the CPU 12a carries out a processing of calculating the settlement amount. In this way, if the CPU 12a calculates the settlement amount, the settlement apparatus 12 is referred to as a checkout apparatus.

In Act 32, the CPU 12a controls the printer 12h to issue a receipt showing information included in the settlement information stored in the RAM 12c or the auxiliary memory unit 12d and the result of the settlement processing.

In Act 33, the CPU 12a determines whether or not the shopping basket 41 is removed from the table 121 similarly to the processing in Act 28. If the shopping basket 41 is not removed, the CPU 12a repeats the processing in Act 33. In this way, the CPU 12a waits for removing of the shopping basket 41 from the table 121 in Act 33. If the shopping basket 41 is removed, Yes is taken in Act 33 and the CPU 12a returns to the standby state in Act 21 and Act 22.

According to the checkout system 10 as stated above, the following effect is achieved. If the purchase registration of one transaction is completed and the settlement information is added to the waiting list L1 of the POS server 13, it is possible to rapidly start the purchase registration relating to another or next transaction based on the settlement information in the commodity registration apparatus 11 without waiting for the completion of the settlement of the transaction the purchase registration of which is just completed. The customer 22 places the shopping basket 41 in which commodities the purchase registration of which is completed are put on the table 121 of the settlement apparatus 12 In a standby state, and thus, it is possible to rapidly start the settlement relating to the commodities the purchase registration of which is completed. Accordingly, the purchase registration processing and the settlement processing can be effectively executed.

As it is not necessary for the store clerk 21 to select the transfer destination of the settlement information, a working burden of the store clerk 21 becomes smaller compared with a case in which the selection of the transfer destination by the store clerk is necessary.

As the customer 22 can freely select the settlement apparatus 12 used for the settlement, the convenience for the customer 22 becomes higher compared with a case in which the settlement apparatus 12 used for the settlement is determined by the store clerk 21 or the checkout system 10.

As the settlement information is specified based on the shopping basket 41 (basket code) in the settlement apparatus 12, the convenience for the store clerk 21 and the customer 22 becomes higher compared with a case in which a recording medium which records an identification code of the settlement information for specifying the settlement information or the settlement information itself is used.

The commodity registration apparatus 11 associates a combination of the basket codes of a plurality of the shopping baskets 41 with the settlement information respectively in a case where a plurality of the shopping baskets 41 is used to carry a plurality of commodities in one transaction. If one basket code is acquired, the settlement apparatus 12 executes the settlement processing based on the settlement information associated with the combination of the basket codes including the one basket code. That is, the settlement apparatus 12 executes the settlement processing if any one of the basket codes of the plurality of the shopping baskets 41 is acquired. Therefore, the customer 22 may only put any one of the shopping baskets 41 on the table 121 without distinguishing the plurality of the shopping baskets 41.

The various kinds of modifications as follows are applicable to the embodiment.

Instead of forming the barcode 41a on the basket 41, a transmitter of the identification code such as an RFID (radio frequency identification) tag may be attached to the shopping basket 41. In this case, instead of the scanners for basket 11i and 12i, receivers which receive an identification code transmitted by the transmitter are provided respectively in the commodity registration apparatus 11 and the settlement apparatus 12.

The commodity registration apparatus 11 may also hold a waiting list of the settlement information generated by itself in the auxiliary memory unit 11d. In this case, the auxiliary memory unit 11d functions as a memory device. And, the CPU 12a of the settlement apparatus 12 transmits the transfer request in Act 25 to each of the commodity registration apparatuses 11. The transfer request may be transmitted to all the plural commodity registration apparatuses 11 in a manner of a broadcast transmission or a multi-address transmission, or sequentially transmitted to each of the plural commodity registration apparatuses 11 one by one.

The commodity registration apparatus 11 may transmit the settlement information and the basket code list to all the plural settlement apparatuses 12. In this case, each of the settlement apparatuses 12 holds the waiting list L1 in the auxiliary memory unit 12d. The auxiliary memory unit 12d functions as a memory device. In a case in which the basket code is acquired, the CPU 12a retrieves the auxiliary memory unit 12d arranged in the same settlement apparatus 12 to carry out the settlement processing based on the settlement information associated with the basket code list containing the acquired basket code. If the settlement processing is completed, the CPU 12a transmits a disablement request containing the acquired basket code or the basket code list containing the basket code to other settlement apparatuses 12. The CPU 12a of the settlement apparatus 12 which receives the disablement request via the communication unit 12j disables the data record containing the basket code or the basket code list included in the disablement request in the waiting list L1 held in the auxiliary memory unit 12d of the same settlement apparatus 12.

The memory device storing the waiting list L1 may be provided to an optional information processing apparatus other than the commodity registration apparatus 11, the settlement apparatus 12 and the POS server 13. However, it is required that the information processing apparatus equipped with the memory device described above can communicate with the commodity registration apparatus 11 and the settlement apparatus 12.

A part or all of functions realized through the control processing by the CPU 11a or the CPU 12a may also be achieved by a hardware, such as a logic circuit, for executing information processing that is not carried out by a program. Further, each function described above may also be realized by combining a software control to the hardware such as the logic circuit.

As the carrying equipment, instead of or in addition to the shopping basket 41, other types of equipment such as a tray or a cart may also be used. A barcode is also formed in advance on these other types of equipment similarly to the shopping basket 41.

In the waiting list L1, only the initially acquired basket code relating to one transaction may be associated with the settlement information. In this case, if a plurality of commodities relating to one transaction is divided into a plurality of the shopping baskets 41, the store clerk 21 guides the customer 22 to place the shopping basket 41 initially placed on the area 31b at the time of the purchase registration of the same transaction on the table 121 of the settlement apparatus 12.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such forms or modifications as would fall within the scope of the invention.

## Claims

1. A checkout system comprising a commodity registration apparatus and a settlement apparatus, wherein
the commodity registration apparatus includes:
a generation module configured to generate settlement information for settling a purchased commodity in a carrying equipment,
a first acquisition module configured to acquire an identification code of the carrying equipment which is moved from the commodity registration apparatus to the settlement apparatus, and
a control module configured to store the settlement information generated by the generation module in a memory device in association with the identification code acquired by the first acquisition module; and
the settlement apparatus includes:
a second acquisition module configured to acquire the identification code of the carrying equipment moved to the settlement apparatus, and
a settlement module configured to execute a settlement processing for the purchased commodity in the carrying equipment based on the settlement information stored in the memory device in association with the identification code, acquired by the first acquisition module, which is the same as that acquired by the second acquisition module.

2. The checkout system according to claim 1, wherein the control module stores the settlement information in the memory device in association with a combination of a plurality of identification codes if the first acquisition module acquires the plurality of identification codes within a period in which the generation module executes a processing for generating the settlement information, and the settlement module executes the settlement processing based on the settlement information if the settlement information is stored in the memory device in association with the combination of the plurality of identification codes including the identification code acquired by the second acquisition module.

3. The checkout system according to claim 1 or 2, further including an information processing apparatus, wherein the memory device is arranged in one of the commodity registration apparatus, the settlement apparatus and the information processing apparatus.

4. The checkout system according to claim 2 or 3, further including an information processing apparatus, wherein the memory device is arranged in one of the commodity registration apparatus, the settlement apparatus and the information processing apparatus.

5. The checkout system according to any one of claims 1 to 4, further comprising a plurality of settlement apparatus.

6. The checkout system according to any one of claims 1 to 5; further comprising a plurality of commodity registration apparatus.

7. The checkout system according to claim 5 or 6, wherein the number of the settlement apparatus is superior to the number of the commodity registration apparatus.

8. A commodity registration apparatus, which constitutes a checkout system together with a settlement apparatus which acquires an identification code of a carrying equipment in which a purchased commodity is put and executes a settlement processing for the purchased commodity in the carrying equipment based on a settlement information in a memory device, comprising:
a generation module configured to generate the settlement information;
a first acquisition module configured to acquire the identification code of the carrying equipment moved from the commodity registration apparatus to the settlement apparatus; and
a control module configured to store the settlement information generated by the generation module in the memory device in association with the identification code acquired by the first acquisition module.

9. A settlement apparatus, which constitutes a checkout system together with a commodity registration apparatus which generates a settlement information of a purchased commodity in a carrying equipment, acquires an identification code of the carrying equipment and stores the settlement information in a memory device in association with the identification code, comprising:
a second acquisition module configured to acquire an identification code of the carrying equipment moved to the settlement apparatus; and
a settlement module configured to execute a settlement processing for the purchased commodity in the carrying equipment based on the settlement information stored in the memory device in association with the identification code the same as that acquired by the second acquisition module.
